# EUROPEAN PATENT SPECIFICATION

(11) **EP 4 019 810 B1**
(45) Date of publication and mention of the grant of the patent: **06.08.2025**
(21) Application number: 20872997.0
(22) Date of filing: 15.09.2020
(51) Int. Cl.: F16H 59/08, F16H 61/02, F16D 48/02, B63H 23/08, B63H 23/26, B63H 23/30

(54) **REDUCTION/REVERSE GEAR**
UNTERSETZUNGS-/UMKEHRGETRIEBE
ENGRENAGE RÉDUCTEUR/ARRIÈRE

(30) Priority: 02.10.2019 JP 2019182286; 16.10.2019 JP 2019189519
(43) Date of publication of application: 29.06.2022
(60) Divisional application: 24214782.5
(73) Proprietor: Kanzaki Kokyukoki Mfg. Co., Ltd., Hyogo 661-0981 (JP)
(72) Inventor: EBIHARA Tomoyuki, Amagasaki-shi Hyogo 661-0981 (JP); YASUDA Osamu, Amagasaki-shi Hyogo 661-0981 (JP); KAWAMURA Ryo, Amagasaki-shi Hyogo 661-0981 (JP); YAMANISHI Kenta, Amagasaki-shi Hyogo 661-0981 (JP)
(74) Representative: Isarpatent
(86) International application number: PCT/JP2020/034907
(87) International publication number: WO 2021/065482

(56) References cited:
- JP-A- 2018 197 042
- JP-A- 2018 197 042
- JP-A- H0 680 098
- JP-A- S6 440 746
- JP-B2- 2 533 337
- JP-B2- 3 960 719
- JP-B2- H0 767 919
- JP-U- H0 678 637
- TAKE ET AL: "Structure of reduction reverse machine, control circuit, overhaul(2)", JOURNAL OF FISHING BOAT AND SYSTEM ENGINEERING ASSOCIATION OF JAPAN,, vol. 3, no. 22, 10 June 2003 (2003-06-10), pages 36 - 41, XP009534670, ISSN: 1346-9800
- TAKE, SATOSHI: "Structure of reduction reverse machine, control circuit, overhaul(2)", JOURNAL OF FISHING BOAT AND SYSTEM ENGINEERING ASSOCIATION OF JAPAN, vol. 3, no. 22, 10 June 2003 (2003-06-10), pages 36 - 41, XP009534670, ISSN: 1346-9800
- YOSHIKATSU TAMORI, KAZUYOSHI HARADA, TADASHI NAKAJIMA: "Electronically Controlled Clutch", JOURNAL OF THE MARINE ENGINEERING SOCIETY OF JAPAN , vol. 32, no. 4, 1 April 1997 (1997-04-01), pages 297 - 303, XP055906856, ISSN: 0388-3051, DOI: 10.5988/jime1966.32.297
- SHIOTA, YUZI, YAMAGUCHI TAKANOBU: "Development of New Control System with Digital Governor for Main Propulsion Diesel Engines", JOURNAL OF THE JAPAN INSTITUTION OF MARINE ENGINEERING, vol. 37, no. 12, 1 December 2002 (2002-12-01), pages 900 - 905, XP055813818, ISSN: 1884-3778, DOI: 10.5988/jime.37.900
- TAKE, SATOSHI: "Structure of reduction reverse machine, control circuit, overhaul(1)", JOURNAL OF FISHING BOAT AND SYSTEM ENGINEERING ASSOCIATION OF JAPAN, vol. 3, no. 21, 10 May 2003 (2003-05-10), pages 23 - 30, XP009534666, ISSN: 1346-9800

## Description

### TECHNICAL FIELD

The present invention relates to a reduction reverse gear which transmits the rotational power of a main engine mounted on a hull to a propeller via a forward/reverse rotation switching mechanism.

### BACKGROUND ART

Conventionally, a reduction reverse gear for a marine vessel such as a fishing boat includes a forward/reverse rotation switching mechanism (forward/reverse rotation clutch) which switches rotation power of an engine mounted on a hull to forward, neutral or reverse output and transmits it to a propeller, a forward/reverse switching valve to control a switching operation of the forward/reverse rotation switching mechanism, and a trolling device which controls pressure of working oil for the forward/reverse rotation switching mechanism. By causing the forward/reverse rotation switching mechanisms to make a slip engagement (half-clutch engagement), the propeller is rotated at a low speed while the engine is kept at a constant speed, a low speed propulsion such as trolling is performed with the propeller rotating at a low speed while an engine speed is kept constant (see, for example, Patent Literature 1).

### CITATION LIST

### PATENT LITERATURE

Patent Literature 1: Japanese Utility-model Laid-Open Publication No. H6-78637. The cited patent literature discloses a hydraulic control system for adjusting the hydraulic pressure of the front and reverse clutch. It discloses a proportional solenoid valve for varying the pilot pressure of the low-speed valve. A direct electromagnetic valve for switching the pilot pressure supply circuit is provided so as to move the low-speed valve to the high-pressure adjustment position.
Prior art document "Take et al. "Structure of reduction reverse machine, control circuit, overhaul(2)", Journal of Fishing Boat and System Engineering Association of Japan, vol. 3, no. 22, 10 June 2003 (2003-06-10), pages 36-41, XP009534670, ISSN: 1346-9800" discloses a structure and control circuit of slow speed reversing machine as well as aspects regarding the reduction of inspection maintenance. It discloses a gear for marine vessels with electronic controllers including various characteristics, e.g. high pressure oil being applied to activate the clutch and the measurement of the clutch hydraulic pressure using a pressure sensor.

### SUMMARY OF INVENTION

### TECHNICAL PROBLEM TO BE SOLVED

However, in such type of reduction reverse gear, for example a common clutch connection control has been performed when switching the forward or reverse rotation, regardless of the size of each of clutches in the forward/reverse rotation switching mechanism (forward and reverse rotation clutches), and it has never suggested any attempts aimed at optimization of clutch connection control for each of clutches.

### MEANS FOR SOLVING THE PROBLEMS

In light of the above mentioned circumstance, the technical problem of the present invention is to provide an improved reduction reverse gear.

The invention of claim 1 is a reduction reverse gear for marine vessel including a hydraulic clutch-type forward/reverse rotation switching mechanism, configured to convert rotation power of a main engine mounted on a hull to an output of forward rotation, neutral, or reverse rotation and to transfer the output to a propeller, wherein neutral represents a state in which no rotation power is transmitted to the output,,a forward/reverse rotation switching valve which is a three-position switching type including a forward rotation position, a neutral position and a reverse rotation position and is configured to control switching operation of the forward/reverse rotation switching mechanism, and a trolling device that regulates and controls the pressure of a working oil flowing toward the forward/reverse rotation switching mechanism, wherein the reduction reverse gear is configured such that: when the forward/reverse rotation switching valve is switched to the forward rotation position or the reverse rotation position during normal propulsion, wherein during normal propulsion the adjustment of the engine speed is made by means of a throttle lever, the trolling device is configured to control a pattern that reduces the pressure of the working oil flowing toward the forward/reverse rotation switching mechanism so that the pattern is different between when the forward/reverse rotation switching valve is in the forward rotation position and when the forward/reverse rotation switching valve is in the reverse rotation position; and the reduction reverse gear comprises an operation detection member configured to detect an operation state of the forward/reverse rotation switching valve; and when the operation detection member detects that the forward/reverse rotation switching valve is in the neutral position during normal propulsion, the trolling device is configured to control the working oil so that the pressure of the working oil flowing toward the forward/reverse rotation switching mechanism is not reduced.

According to a preferred embodiment according to the present invention the trolling device comprises a pressure reducing valve configured to reduce the pressure of the working oil and supplies the pressure reduced working oil to the forward/reverse rotation switching mechanism, a proportional valve configured to control output pressure of the working oil output from the pressure reducing valve, and a direct connection valve configured to turn working oil supply to the proportional valve on or off, and the trolling device is configured to control the pattern that reduces the pressure of the working oil flowing toward the forward/reverse rotation switching mechanism so as to be different by changing a working pattern of the proportional valve.

According to a further preferred embodiment according to the present invention during transition to low speed propulsion, wherein the propeller is rotated at low speed while the engine is kept at a constant speed, a feedback control is configured to be performed based on a rotation speed of the propeller after the trolling device linearly increases the pressure of the working oil flowing toward the forward/reverse rotation switching mechanism.

According to a further preferred embodiment according to the present invention the trolling device includes a pressure reducing valve configured to reduce the pressure of the working oil and supply the pressure reduced working oil to the forward/reverse rotation switching mechanism, a proportional valve configured to control output pressure of the working oil output from the pressure reducing valve, and a direct connection valve configured to turn working oil supply to the proportional valve on or off; and when the operation detection member detects that the forward/reverse rotation switching valve is in a neutral position during normal propulsion, the trolling device is configured to control the working oil so that the direct connection valve turns off the working oil supply to the proportional valve, and the pressure reducing valve is configured to deliver the working oil to the forward/reverse rotation switching mechanism without reducing the pressure of the working oil.

The reduction reverse gear for marine vessel according to the present invention wherein the reduction reverse gear may include a trolling priority member configured to operate to fully close the pressure reducing valve in an event where an error such as a communication failure occurs during low speed propulsion.

### EFFECT OF THE INVENTION

According to the present invention, when the forward/reverse rotation switching valve is switched to a forward rotation position or a reverse rotation position during normal propulsion, the trolling device controls a pattern that reduces pressure of working oil flowing toward the forward/reverse rotation switching mechanism so that the pattern is different between when the forward/reverse rotation switching valve is in the forward rotation position and when the forward/reverse rotation switching valve is in the reverse rotation position. So, for example, even when the size of the forward/reverse rotation switching mechanism (forward rotation clutch and reverse rotation clutch) are different from each other, this makes it easy to set pressure of working oil, working oil supply rate, and the like according to the forward/reverse rotation switching mechanism (forward rotation clutch and reverse rotation clutch). Therefore, it is possible not only to optimize a connection speed of the forward/reverse rotation switching mechanism (forward rotation clutch and reverse rotation clutch), but also to mitigate shock caused by connection of the forward/reverse rotation switching mechanism(forward rotation clutch and reverse rotation clutch) at the forward/reverse rotation switching.

### BRIEF DESCRIPTION OF THE DRAWINGS

[Figure 1] Figure 1 is a schematic side view of a fishing boat mounted with a reduction reverse gear, representing an embodiment of the present invention;
[Figure 2] Figure 2 is a skeleton diagram schematically illustrating a power transmission system of the reduction reverse gear;
[Figure 3] Figure 3 is a rear view schematically illustrating a gear arrangement of the reduction reverse gear;
[Figure 4] Figure 4 is a hydraulic circuit diagram of the reduction reverse gear;
[Figure 5] Figure 5 is a functional block diagram of a controller in the reduction reverse gear;
[Figure 6] Figure 6 is an operation table explaining an operation state of each of components for different propulsion conditions;
[Figure 7] Figure 7 is a timing chart illustrating an operation pattern of a proportional solenoid valve and the like when a forward/reverse rotation lever is operated in a forward rotation direction during normal speed propulsion;
[Figure 8] Figure 8 is a timing chart illustrating an operation pattern of a proportional solenoid valve and the like when a forward/reverse rotation lever is operated in a reverse rotation direction during normal speed propulsion;
[Figure 9] Figure 9 is a timing chart illustrating an operation pattern of a proportional solenoid valve and the like during transition to low speed propulsion;
[Figure 10] Figure 10 is a first alternative example of a timing chart illustrating an operation pattern of a proportional solenoid valve and the like during transition to low speed propulsion;
[Figure 11] Figure 11 is a second alternative example of a timing chart illustrating an operation pattern of a proportional solenoid valve and the like during transition to low speed propulsion; and
[Figure 12] Figure 12 is an alternative example of a functional block diagram of a controller in the reduction reverse gear.

### DESCRIPTION OF EMBODIMENTS

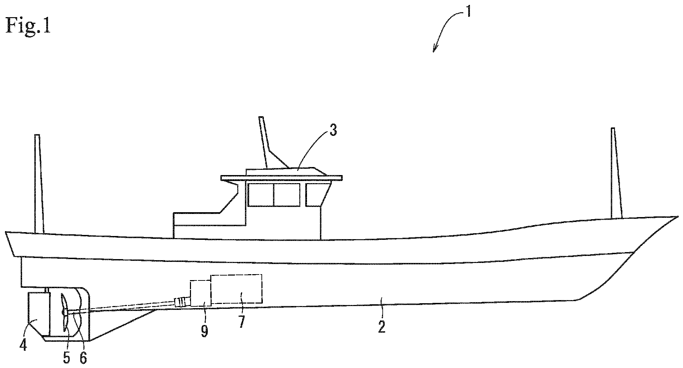

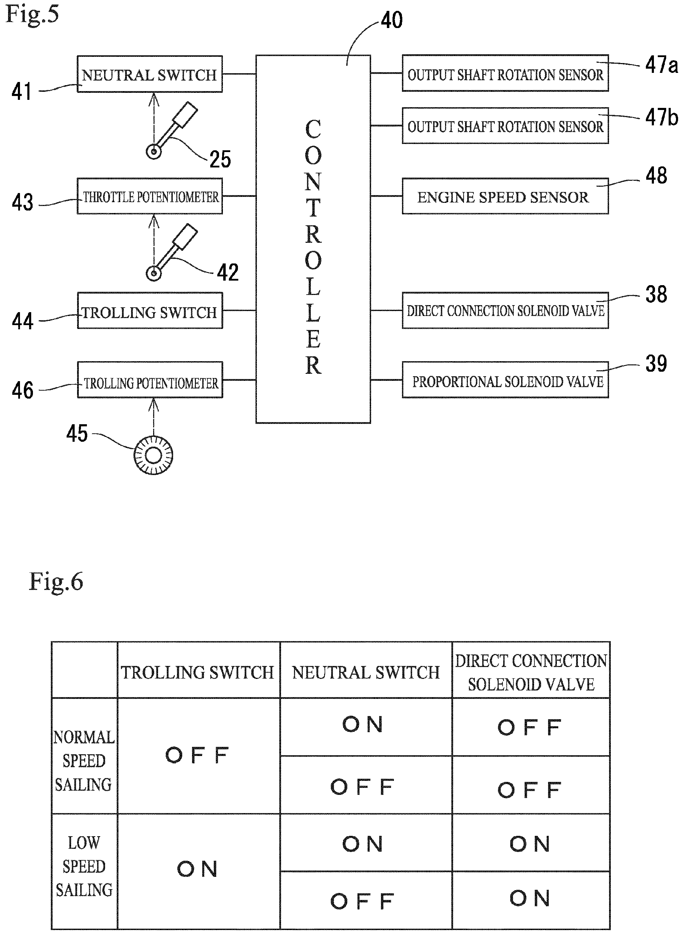

Now, some specific embodiments of the present invention will be described below with reference to the drawings (Figures 1 through 7). As shown in Figure 1, a fishing boat 1, which is a marine vessel, includes a hull 2, a cabin 3 located on a top of the hull at the center side thereof, a rudder 4 on a bottom of the hull 2 at an aft side thereof, and a propeller 5 located on the bottom of the hull 2 at the aft side thereof in front of the rudder 4. The cabin 3 has a navigation unit inside. Inside the cabin 3, the navigation unit is provided with a forward/reverse rotation lever 25 as a forward/reverse control device which switches a traveling direction of the hull 2 between forward and backward, a throttle lever 42 to set and hold an engine speed of an engine 7, a trolling switch 44 to set a turning on/off of trolling propulsion (low speed propulsion), and a trolling dial 45 and the like to set a trolling speed (low speed propulsion speed) (see Figure 5). Inside the cabin 3, although not shown in the drawings, a steering handle is provided to change the traveling direction of the hull 2 in a right and left directions by steering it.

A propulsion shaft 6, which rotates the propeller 5, is supported at the aft side on the bottom of the hull 2. The propeller 5 is attached to an end on a protruding side of the propulsion shaft 6. In the hull 2, there is provided the engine 7 as a main engine which is a driving source of the propeller 5 and a reduction reverse gear 9 to transmit rotation power of the engine 7 to the propeller 5 via the propulsion shaft 6. The propeller 5 is forced to rotate by the rotation power transmitted from the engine 7 to the propulsion shaft 6 via the reduction reverse gear 9.

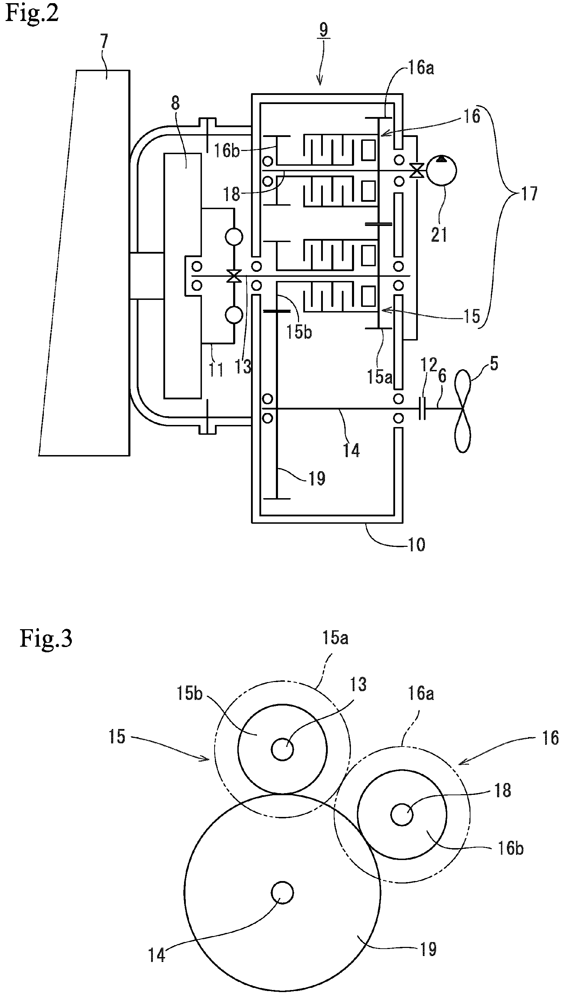

As shown in Figure 2, a housing 10, which is an outer casing of the reduction reverse gear 9, has an input shaft 13 connected to a flywheel 8 of the engine 7 via a damper coupling 11 and an output shaft 14 connected to the propulsion shaft 6 via coupling 12. The input shaft 13 is rotatably supported by upper portions of the housing 10. The input shaft 13 protrudes in a forward direction from a front side of the upper portion of the housing 10. The output shaft 14 is rotatably supported by lower portions of the housing 10. The output shaft 14 protrudes in a backward direction from a rear side of the lower portion of the housing 10. The input shaft 13 and the output shaft 14 extend in parallel inside the housing 10. The housing 10 houses a forward rotation clutch 15 which connects and disconnects power transmitted in the forward (advance) direction from the input shaft 13 to the output shaft 14 and a reverse rotation clutch 16 which connects and disconnects power transmitted in the reverse (retreat) direction from the input shaft 13 to the output shaft 14. The forward rotation clutch 15 and the reverse rotation clutch 16 constitute a forward/reverse rotation switching mechanism 17.

The forward rotation clutch 15 and the reverse rotation clutch 16 are of a wet-multi-disc hydraulic friction type. The forward rotation clutch 15 is located on the input shaft 13. A forward rotation gear 15a is provided in the forward rotation clutch 15 on an upstream side in a direction of power transmitted from the engine 7. A forward rotation reduction gear 15b is provided in the forward rotation clutch 15 on a downstream side in the direction of power transmitted from the engine 7. The forward rotation gear 15a is fixed to the input shaft 13. The forward rotation reduction gear 15b is rotatably fitted to the input shaft 13.

The reverse rotation clutch 16 is located on a reverse rotation shaft 18 extending in parallel with the input shaft 13. A reverse rotation gear 16a is provided in the reverse rotation clutch 16 on an upstream side in a direction of power transmitted from the engine 7. A reverse rotation reduction gear 16b is provided in the reverse rotation clutch 16 on a downstream side in the direction of power transmitted from the engine 7. The reverse rotation gear 16a is fixed to the reverse rotation shaft 18. The reverse rotation reduction gear 16b is rotatably fitted to the reverse rotation shaft 18.

The forward rotation gear 15a always meshes with the reverse rotation gear 16a. The forward rotation reduction gear 15b and the reverse rotation reduction gear 16b always mesh with a reduction output gear 19 fixed to the output shaft 14. The forward rotation reduction gear 15b, the reverse rotation reduction gear 16b, and the reduction output gear 19 constitute a reduction gear mechanism with a constant reduction ratio. Rotation power of the output shaft 14 is reduced to a constant reduction ratio through each the reduction rotation gears 15b and 16b and the reduction output gear 19.

A hydraulic pump 21, which supplies working oil to the forward/reverse rotation switching mechanism 17, is mounted on the end of the reverse rotation shaft 18, which is opposed to the flywheel 8 across the reverse rotation clutch 16. The hydraulic pump 21 is configured to be driven by rotation of the reverse rotation shaft 18 based on rotation power of the engine 7. Therefore, the hydraulic pump 21 is driven as long as the engine 7 is running, In an embodiment, the hydraulic pump 21 is mounted on an upper portion of a rear side of the housing 10.

When the forward/reverse rotation lever 25 in the cabin 3 is operated in forward/reverse rotation or in neutral, a supply destination of the hydraulic oil is switched to either the forward rotation clutch 15, the reverse rotation clutch 16 or the neutral. By pressurizingly contacting friction plates of each of clutches 15 and 16 by pressure of working oil suitable for clutch engagement, the input shaft 13 is connected to the output shaft 14 so that power can be transmitted. Namely, when the forward rotation clutch 15 is connected and the reverse rotation clutch 16 is disconnected, it comes into an advance state where rotation power of the input shaft 13 is transmitted as power in the forward rotation (advance) direction to the output shaft 14.

Conversely, when the forward rotation clutch 15 is disconnected and the reverse rotation clutch 16 is connected, it comes into an retreat state where rotation power of the input shaft 13 is transmitted as power in the reverse rotation (retreat) direction to the output shaft 14. When both the forward rotation clutch 15 and the reverse rotation clutch 16 are disconnected, it becomes a neutral state in which rotation power of the input shaft 13 is not transmitted to the output shaft 14. When a slip engagement (half clutch engagement) is attained by increasing or decreasing a degree of pressurizing contact of the friction plates of each of clutches 15 and 16 with pressure of working oil, a portion of rotation power of the input shaft 13 is transmitted to the output shaft 14, so it comes to a low speed propulsion state where the output shaft 14 and thus the propeller 5 rotate at a low speed. During normal propulsion, adjustment of the propulsion speed of the fishing boat 1 is made by means of the throttle lever 42 inside the cabin 3.

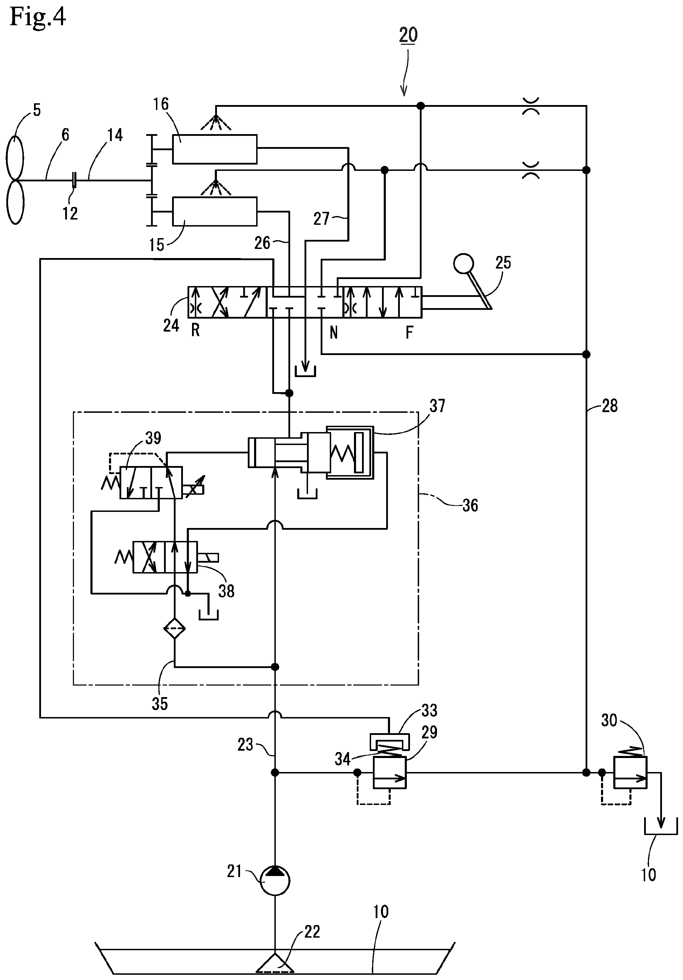

Next, the structure of the hydraulic circuit 20 of the reduction reverse gear 9 will be described below with reference to Figure 4 in addition to the above referred drawings. The hydraulic circuit 20 of the reduction reverse gear 9 is provided with the hydraulic pump 21 driven by rotational power of the engine 7. The hydraulic pump 21 supplies hydraulic oil to the forward rotation clutch 15 and the reverse rotation clutch 16, etc. A suction side of the hydraulic pump 21 is connected to a working oil tank via a strainer 22. In the embodiment, working oil is stored in the housing 10 of the reduction reverse gear 9, and the housing 10 functions as the working oil tank.

A working oil path 23 led from a discharge side of the hydraulic pump 21 is connected to a forward rotation oil path 26 which is directed to the forward rotation clutch 15 and to a reverse rotation oil path 27 which is directed to the reverse rotation clutch 16 via a pressure reducing valve 37 of a trolling device 36 and a forward/reverse rotation switching valve 24. The forward/reverse rotation switching valve 24 is of a three-position switching type including a forward rotation position F, a neutral position N, and a reverse rotation position R and is configured to control the forward/reverse rotation switching mechanism 17. Namely, the forward/reverse rotation switching valve 24 is configured so that through switching operation of the forward/reverse rotation lever 25 as a forward/reverse operation component, it can switch positions among three including the forward rotation position F to supply working oil to the forward rotation clutch 15, the reverse rotation position R to supply working oil to the reverse rotation clutch 16, and the neutral position to stop supplying working oil to both of the clutches 15 and 16.

From between the hydraulic pump 21 and the forward/reverse rotation switching valve 24 in the working oil path 23, a lubricant oil path 28 leads to deliver working oil as lubricant oil to each of the clutches 15 and 16. There are provided in the lubricant oil path 28 a working oil pressure regulating valve 29 of being a relief valve for maintaining oil pressure and a lubricant oil pressure regulating valve 30. After passing through the working oil pressure regulating valve 29, the working oil is depressurized by the lubricant oil pressure regulating valve 30 and then is delivered as lubricant oil to the forward rotation clutch 15 and the reverse rotation clutch 16. Unnecessary working oil (lubricant oil) exceeding a predetermined pressure is returned from the lubricant oil pressure regulating valve 30 into the housing 10.

The working oil pressure regulating valve 29 is provided with a loose-fitted valve 33 which is used to mitigate shock caused by clutch connection operation when switching between the forward rotation and the reverse rotation. The loose-fitted valve 33 gradually increase pressure of working oil delivered to the forward rotation clutch 15 and the reverse rotation clutch 16 by back pressure introduced with the forward/reverse rotation switching valve 24 to mitigate shock caused by clutch connection operation when switching between the forward rotation and the reverse rotation.

When the forward/reverse rotation switching valve 24 is in the neutral position N, a back chamber of the loose-fitted valve 33 is drained. The working oil pressure regulating valve 29 is opened in a low pressure setting state without being compressed by a relief spring 34. When the forward/reverse rotation switching valve 24 is operated to switch it to the forward rotation position F or the reverse rotation position R, working oil slowly flows into the loose-fitted valve 33 via the forward/reverse rotation switching valve 24, and the loose-fitted valve 33 gradually compresses the relief spring 34. The working oil pressure regulating valve 29 then gradually increasingly shifts to a high pressure setting state to reach the predetermined pressure of working oil. This causes pressure of working oil of the forward rotation clutch 15 or the reverse rotation clutch 16 to gradually increase, and brings the forward rotation clutch 15 and the reverse rotation clutch 16 to a gradually connected (engaged) state and eventually to a fully fitted state. As a result, shock caused by connecting each of clutches 15 and 16 can be mitigated.

In the working oil path 23 between the hydraulic pump 21 and the forward/reverse rotation switching valve 24, not only the lubricant oil path 28 but also a pilot oil path 35 is branched off. There are provided in the pilot oil path 35 a proportional solenoid valve 39 to control output oil pressure of the pressure reducing valve 37 capable of reducing pressure of working oil and supplying it to the forward/reverse rotation switching mechanism 17 and a direct connection solenoid valve 38 to turn working oil supply to the proportional solenoid valve 39 on or off. The direct connection solenoid valve 38 is configured to be able to switch between two positions which are a pressure reducing position to supply pilot pressure to the pressure reducing valve 37 and a direct connection position not to supply pilot pressure to the pressure reducing valve 37 by excitation or demagnetization of an electromagnetic solenoid in response to a turning on or off state of the trolling switch 44. The proportional solenoid valve 39 is duty-controlled according to an operation amount of a trolling dial 45.

When the direct connection solenoid valve 38 is activated to be switched to the pressure reducing position by excitation of the electromagnetic solenoid of the direct connection solenoid valve 38 in response to the ON operation of the trolling switch 44, the proportional solenoid valve 39 whose degree of open is adjusted in accordance with the operation amount of the trolling dial 45 applies pilot pressure to the pressure reducing valve 37 and causes an internal spool of the pressure reducing valve 37 to move slidely. Pressure of the working oil from the working oil path 23 is reduced according to the amount of slide movement of the internal spool of the pressure reducing valve 37, and the pressurereduced working oil is supplied to the forward rotation clutch 15 and the reverse rotation clutch 16 via the forward/reverse rotation switching valve 24.

When the direct connection solenoid valve 38 is activated to be switched to the direct connection position by demagnetization of the electromagnetic solenoid of the direct connection solenoid valve 38 in response to the OFF operation of the trolling switch 44, the proportional solenoid valve 39 no longer applies pilot pressure to the pressure reducing valve 37. The internal spool is slidely moved by spring force, so that the pressure reducing valve 37 is fully opened. As a result, pressure of working oil from the working oil path 23 is not reduced and the working oil is supplied to the forward rotation clutch 15 and the reverse rotation clutch 16 via the forward/reverse rotation switching valve 24. By combining the pressure reducing valve 37, a direct connection solenoid valve 38, and a proportional solenoid valve 39, the trolling device 36, which adjusts pressure of working oil flowing toward the forward/reverse rotation switching mechanism 17, is configured.

Figure 5 shows a functional block diagram of a controller 40 mounted on the fishing boat 1 according to the embodiment. The controller 40 mainly supervises control of an overall operation of the engine 7 and the reduction reverse gear 9, although the details are omitted in the drawings, it includes a CPU carrying out various arithmetic processes and controls, a ROM for storing control programs and data, a RAM for temporarily storing control programs and data, and an input/output interface, etc.

There are electrically connected to the controller 40 a neutral switch 41 as an operation detection member to detect the operating position of the forward/reverse rotation lever 25, a throttle potentiometer 43 to detect the operating position of the throttle lever 42, a trolling potentiometer 46 to detect the operating position of the trolling switch 44 and the operating position of the trolling dial 45, two output shaft rotation sensors 47a and 47b to detect the rotation speed of the output shaft 14 and thus the propeller 5, an engine rotation sensor 48 to detect a rotation speed of the engine 7, the direct connection solenoid valve 38 (electromagnetic solenoid thereof), and the proportional solenoid valve 39 (electromagnetic solenoid thereof), etc.

In this way, by providing with two output shaft rotation sensors 47a and 47b, the output shaft 14 and thus not only the speed of rotation but also the direction of rotation of the propeller 5 can be detected, this makes it possible to carry out control suitable for the direction of rotation of the propeller. For example, at the clutch connection control described below, the clutch connection delay can be suppressed when the fishing boat 1 is going in a direction opposite to the operation position of the forward/reverse rotation lever 25.

The controller 40 controls the direct connection solenoid valve 38 and the proportional solenoid valve 39 according to the turning on or off state of the trolling switch 44 and the operation amount of the trolling dial 45. The neutral switch 41 according to the embodiment detects from the operating position of the forward/reverse rotation lever 25 whether the forward/reverse rotation switching valve 24 is in the neutral position or not. However, the operation detection member is not limited thereto. It may be a device capable of detecting whether the forward/reverse rotation switching valve 24 is in the forward rotation position F or the reverse rotation position R, or may be a forward/reverse rotation potentiometer.

According to an embodiment, which is not part of the claimed invention, the controller 40 is configured so that in case where the neutral switch 41 detects that the forward/reverse rotation switching valve 24 is in the neutral position N during normal propulsion (the neutral switch 41 is the ON state), the trolling device 36 does not reduce pressure of the working oil flowing toward the forward/reverse rotation switching mechanism 17. In other words, the controller 40 is configured so that the trolling device 36 does not reduce pressure of working oil flowing toward the forward/reverse rotation switching mechanism 17 regardless of detection information of the neutral switch 41 during normal propulsion. In the embodiment, during normal propulsion in which the trolling switch 44 is OFF, regardless of whether the neutral switch 41 is on or off, the direct connection solenoid valve 38 turns off working oil delivery to the proportional solenoid valve 39, and the pressure reducing valve 37 deliveries working oil to the forward/reverse rotation switching mechanism 17 without reducing pressure of working oil (see Figure 6).

Thus, even if it is erroneously detected that the neutral switch 41 is in the neutral position N, nevertheless the forward/reverse rotation switching valve 24 is in a position (F or R) other than the neutral position, working oil with unreduced pressure (high pressure) can be supplied to the forward/reverse rotation switching mechanism 17, thereby preventing the forward/reverse rotation switching mechanism 17 from being switched to a power shutdown state. Therefore, it becomes to be not concerned that the forward/reverse rotation switching mechanism 17 makes a slip engagement (half-clutch engagement) during normal propulsion within a high-speed rotation range, thereby keeping the forward/reverse rotation switching mechanism 17 from problems such as damage or seizure.

Furthermore, as shown in Figure 6, since during low speed propulsion (trolling propulsion) in which the trolling switch 44 is ON, regardless of whether the neutral switch 41 is on or off, the direct connection solenoid valve 38 turns on working oil delivery to the proportional solenoid valve 39, and the pressure reducing valve 37 deliveries working oil with reduced pressure to the forward/reverse rotation switching mechanism 17 via the forward/reverse rotation switching valve 24, this makes it possible to prevent from shock caused when a sudden increase in pressure of working oil brings the forward/reverse rotation switching mechanism 17 into a fully fitted state, as well as to eliminate a problem of sudden acceleration of a propulsion speed during towing for a net hoist.

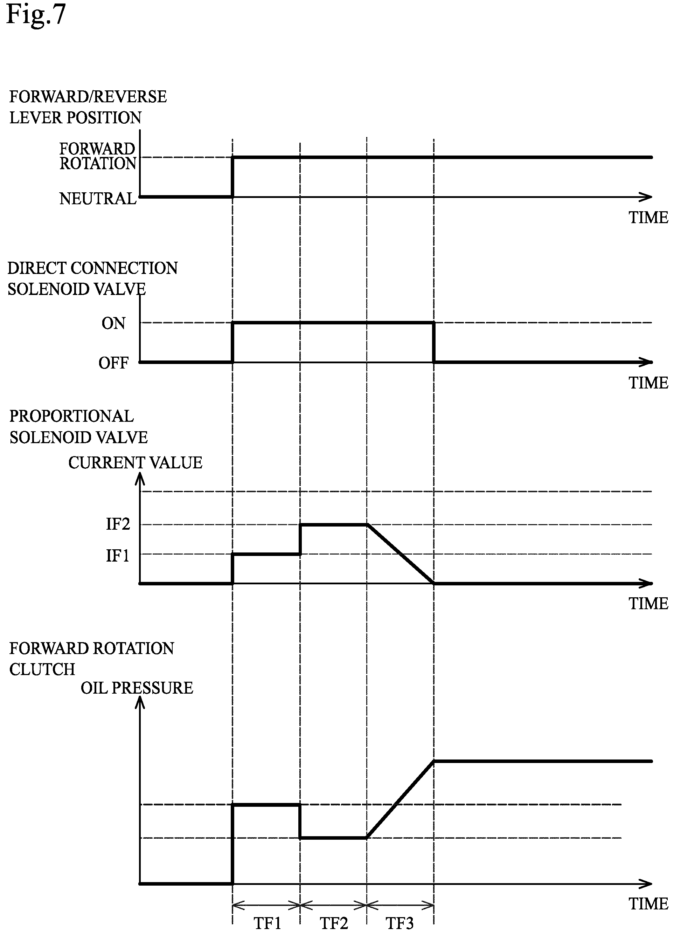

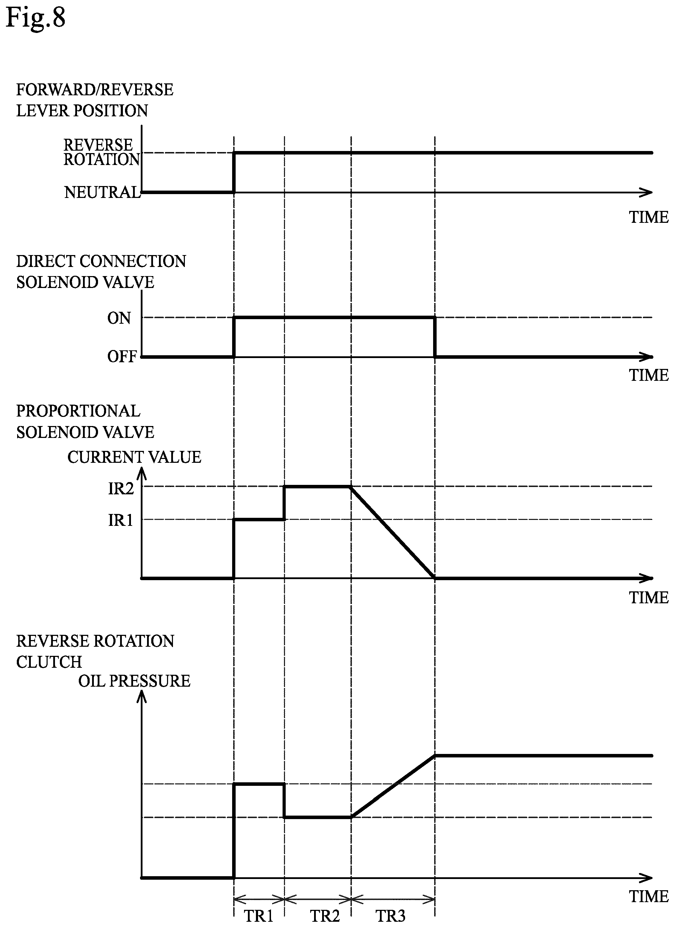

During normal propulsion, the reduction reverse gear 9 according to the embodiment uses not only the loose-fitted valve 33 but also the trolling device 36 to optimize a control of the clutch connection when switching between the forward rotation and the reverse rotation. In this case, when the forward/reverse rotation lever 25 is operated to be switched to a forward rotation direction or a reverse rotation direction, the direct connection solenoid valve 38 is activated to be switched to the reduced pressure position by excitation of the electromagnetic solenoid of the direct connection solenoid valve 38 in response to the switching operation, and after a transition time TF1 (TR1) elapses, during a relay time TF2 (TR2) the proportional solenoid valve 39 applies pilot pressure to the pressure reducing valve 37, and the pressure reduced working oil is delivered to the forward rotation clutch 15 and the reverse rotation clutch 16 via the forward/reverse rotation switching valve 24. Then, during a transition time TF3 (TR3), by gradually decreasing a load of pilot pressure to cause pressure of working oil flowing into the forward rotation clutch 15 or the reverse rotation clutch 16 to gradually increase and eventually bring the forward rotation clutch 15 and the reverse rotation clutch 16 to a fully fitted state, and the direct connection solenoid valve 38 is activated to be switched to the direct connection position by demagnetization of the electromagnetic solenoid of the direct connection solenoid valve 38 (see Figures 7 and 8).

In particular, in the embodiment, as shown in Figures 7 and 8, an operation pattern of the proportional solenoid valve 39 (also referred to as a current value pattern transmitted to the electromagnetic solenoid of the proportional solenoid valve 39) is controlled such that it becomes to be different between when the forward/reverse rotation lever 25 is operated to be switched to the forward direction and when it is operated to be switched to the reverse direction. Namely, when the forward/reverse rotation switching valve 24 is switched to the forward rotation position F or the reverse rotation position R during normal propulsion, a pattern in which the trolling device 36 reduces pressure of working oil flowing toward the forward/reverse rotation switching mechanism 17 is controlled such that it becomes to be different between when the forward/reverse rotation switching valve 24 is switched to the forward rotation position F and when it is switched to the reverse rotation position R. In the examples shown in Figures 7 and 8, transition times are set such that the transition time TR1 when the forward/reverse rotation lever 25 is operated in the reverse direction is shorter than the transition time TF1 when it is operated in the forward direction, as well as the working current values are set such that the working current values IR1 and IR2 at the reverse rotation are greater than the working current values IF1 and IF2 at the forward rotation. The operation pattern of the proportional solenoid valve 39 is not limited to the examples shown in Figures 7 and 8, various patterns can be employed.

For example, when the sizes of the forward rotation clutch 15 and the reverse rotation clutch 16 are different from each other, this makes it easy to set pressure of working oil, working oil supply rate, and the like according to each of the clutches 15 and 16. Therefore, it is possible not only to optimize a connection speed of each of the clutches 15 and 16, but also to mitigate shock caused by connection of each of clutches 15 and 16 at the forward/reverse rotation switching. In particular, in the embodiment, since the transition time TR1 at the reverse rotation is set to be shorter than the transition time TF1 at the forward rotation, as well as the working current values IR1 and IR2 at the reverse rotation are set to be greater than the working current values IF1 and IF2 at the forward rotation, it is possible to retreat the fishing boat 1 smoothly by connecting the reverse rotation clutch 16 swiftly when a resistance is too large to advance.

Furthermore, the reduction reverse gear 9 according to the embodiment is configured so that during transition to low speed propulsion a feedback control is performed based on the rotation speed of the propeller 5 (rotation speed of the output shaft 14 in the embodiment) after the trolling device 36 linearly increases pressure of working oil flowing toward the forward/reverse rotation switching mechanism 17.

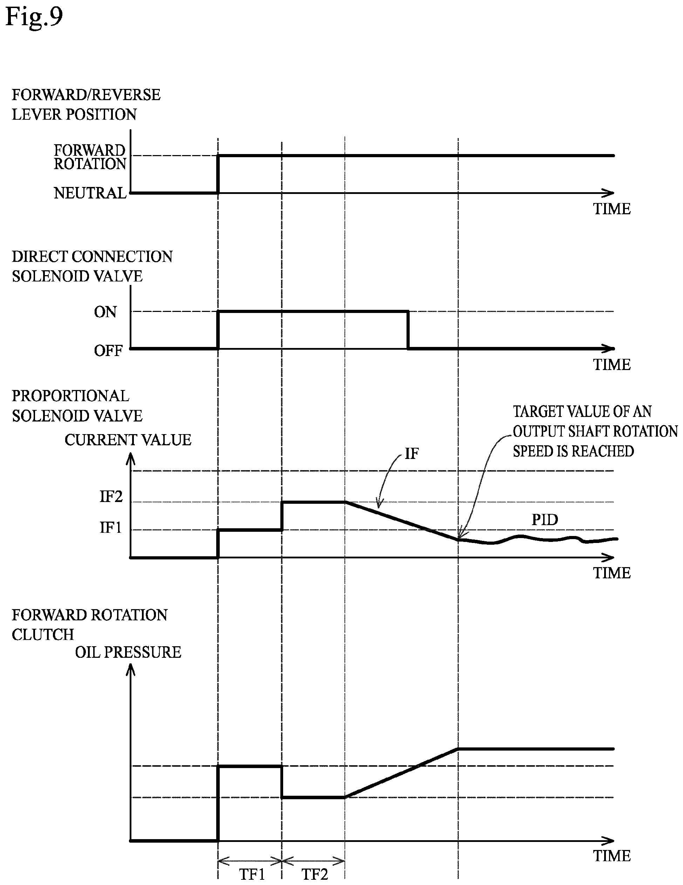

In this case, the direct connection solenoid valve 38 is activated to be switched to the pressure reducing position by excitation of the electromagnetic solenoid of the direct connection solenoid valve 38 in response to the ON operation of the trolling switch 44. After the transition time TF1 elapses, during the relay time TF2 the proportional solenoid valve 39 applies pilot pressure to the pressure reducing valve 37 by transmitting a working current value IF2 to the electromagnetic solenoid of the proportional solenoid valve 39, and the pressure reduced working oil is delivered to the forward rotation clutch 15 and the reverse rotation clutch 16 via the forward/reverse rotation switching valve 24. Then, the working current value IF of the electromagnetic solenoid in the proportional solenoid valve 39, and thus a load of pilot pressure is gradually linearly reduced, so that pressure of working oil flowing into the forward rotation clutch 15 or the reverse rotation clutch 16 is linearly increased. When the rotational speed of the output shaft 14 reaches a target value, it is switched to the feedback control based on the rotation speed of the output shaft 14 to continue the low speed propulsion (see Figure 9).

This allows the propeller 5 to reach the target rotation speed without overshooting during transition to low-speed propulsion, thereby eliminating a problem in which a net is floated by sudden increase in speed when traveling at a low speed, for example.

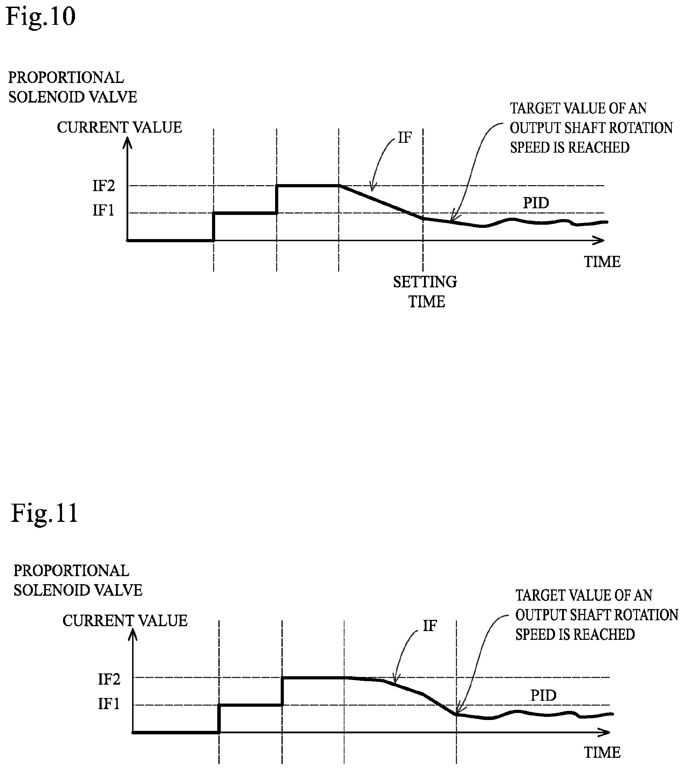

As shown in Figure 10, when linearly increasing the working current value IF of the electromagnetic solenoid of the proportional solenoid valve 39, and thus the load of pilot pressure, even if the rotation speed of the output shaft 14 does not reach the target value, it may be configured to be switched to feedback control based on the rotation speed of the output shaft 14 after a predetermined time is lapse. Otherwise, as shown in Figure 11, it may be configured to change an inclination of the working current value IF of the electromagnetic solenoid of the proportional solenoid valve 39 step by step over time.

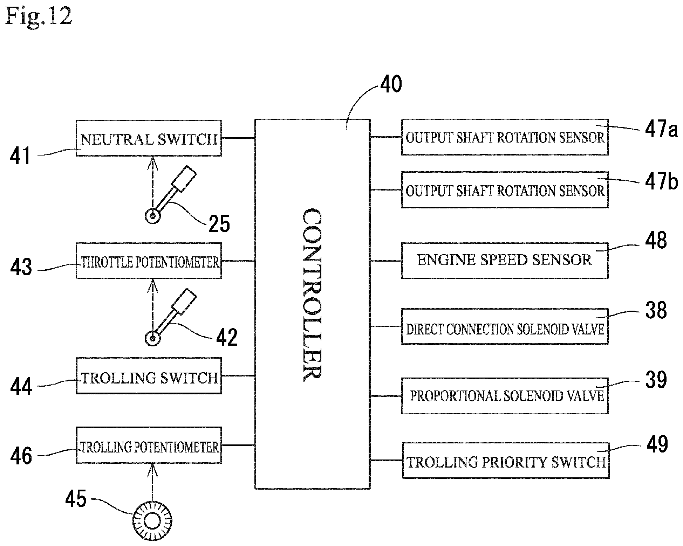

Figure 12 shows an alternative example of a functional block diagram of the controller 40 according to the embodiment. The controller 40 according to the alternative example is electrically connected to a trolling priority switch 49 as a trolling priority member which operates to fully close the pressure reducing valve 37 in an event where an error such as a communication failure occurs during a low speed propulsion. The trolling priority switch 49 is configured to work only at low speed propulsion (only when the trolling switch 44 is an ON state).

The controller 40 is configured so that when the trolling priority switch 49 is an OFF state and an error such as a communication failure occurs, the trolling device 36 does not reduce pressure of working oil flowing toward the forward/reverse rotation switching mechanism 17. Namely, the controller is configured so that the direct connection solenoid valve 38 turns off working oil supply to the proportional solenoid valve 39 and the pressure reducing valve 37 delivers working oil to the forward/reverse rotation switching mechanism 17 without reducing pressure of working oil.

When an error such as a communication failure occurs with an operator turning the trolling priority switch 49 on, the controller 40 is configured so that the direct connection solenoid valve 38 turns on working oil supply to the proportional solenoid valve 39, the pressure reducing valve 37 fully closes to stop supplying working oil to the forward/reverse rotation switching mechanism 17, and the forward/reverse rotation switching mechanism 17 becomes a power-shutdown state. Even if an error such as a communication failure occurs during towing for a net hoist, etc., this makes it possible to prevent from shock caused when a sudden increase in pressure of working oil brings the forward/reverse rotation switching mechanism 17 into a fully fitted state, as well as to eliminate a problem of sudden acceleration of a propulsion speed.

### DESCRIPTION OF REFERENCE NUMERALS

1 Fishing boat
2 Hull
5 Propeller
7 Engine (main engine)
9 Reduction reverse gear
10 Housing
15 Forward rotation clutch
16 Reverse rotation clutch
17 Forward/reverse rotation switching mechanism
20 Hydraulic circuit
24 Forward/reverse rotation switching valve
25 Forward/reverse rotation lever
36 Trolling device
37 Pressure reducing valve
38 Direct connection solenoid valve
39 Proportional solenoid valve
40 Controller
47a, 47b Output shaft rotation sensor

## Claims

1. A reduction reverse gear (9) for marine vessel comprising
a hydraulic clutch-type forward/reverse rotation switching mechanism (17),
wherein said forward/reverse rotation switching mechanism (17) is configured to convert rotation power of a main engine (7) mounted on a hull (2) to an output of forward rotation, neutral, or reverse rotation and to transfer the output to a propeller (5),
wherein neutral represents a state in which no rotation power is transmitted to the output,
a forward/reverse rotation switching valve (24) which is a three-position switching type including a forward rotation position, a neutral position and a reverse rotation position and is configured to control a switching operation of the forward/reverse rotation switching mechanism (17), and
a trolling device (36) configured to regulate and control the pressure of a working oil flowing toward the forward/reverse rotation switching mechanism (17), wherein the reduction reverse gear (9) is configured such that:
when the forward/reverse rotation switching valve (24) is switched to the forward rotation position or the reverse rotation position during normal propulsion,
wherein during normal propulsion the adjustment of the engine speed is made by means of a throttle lever (42),
the trolling device (36) is configured to control a pattern that reduces the pressure of the working oil flowing toward the forward/reverse rotation switching mechanism (17) so that the pattern is different between when the forward/reverse rotation switching valve (24) is in the forward rotation position and when the forward/reverse rotation switching valve (24) is in the reverse rotation position; and
the reduction reverse gear (9) comprises an operation detection member (41) configured to detect an operation state of the forward/reverse rotation switching valve (24);
and when the operation detection member (41) detects that the forward/reverse rotation switching valve (24) is in the neutral position during normal propulsion,
the trolling device (36) is configured to control the working oil so that the pressure of the working oil flowing toward the forward/reverse rotation switching mechanism (17) is not reduced.

2. The reduction reverse gear (9) for marine vessel according to claim 1, wherein
the trolling device (36) comprises a pressure reducing valve (37) configured to reduce the pressure of the working oil and supply the pressure reduced working oil to the forward/reverse rotation switching mechanism (17), a proportional valve (39) configured to control output pressure of the working oil output from the pressure reducing valve (37), and a direct connection valve (38) configured to turn working oil supply to the proportional valve (39) on or off, and
the trolling device (36) is configured to control the pattern that reduces the pressure of the working oil flowing toward the forward/reverse rotation switching mechanism (17) so as to be different by changing a working pattern of the proportional valve (39).

3. The reduction reverse gear (9) for marine vessel according to claim 1 or 2, wherein
during transition to low speed propulsion,
wherein the propeller (5) is rotated at low speed while the engine (7) is kept at a constant speed,
a feedback control is configured to be performed based on a rotation speed of the propeller (5) after the trolling device (36) linearly increases the pressure of the working oil flowing toward the forward/reverse rotation switching mechanism (17).

4. The reduction reverse gear (9) for marine vessel according to claim 1, wherein:
the trolling device (36) comprises a pressure reducing valve (37) configured to reduces the pressure of the working oil and supply the pressure reduced working oil to the forward/reverse rotation switching mechanism (17), a proportional valve (39) configured to control output pressure of the working oil output from the pressure reducing valve (37), and a direct connection valve (38) configured to turn working oil supply to the proportional valve (39) on or off; and
when the operation detection member (41) detects that the forward/reverse rotation switching valve (24) is in a neutral position during normal propulsion, the trolling device (36) is configured to control the working oil so that the direct connection valve (38) turns off the working oil supply to the proportional valve (39), and the pressure reducing valve (37) is configured to deliver the working oil to the forward/reverse rotation switching mechanism (17) without reducing the pressure of the working oil.

5. The reduction reverse gear (9) for marine vessel according to claim 4, wherein
the reduction reverse gear (9) comprises a trolling priority member (49) configured to operate to fully close the pressure reducing valve (37) in an event where an error such as a communication failure occurs during low speed propulsion.

## Patentansprüche

1. (Geändert) Untersetzungs-Wendegetriebe (9) für Wasserfahrzeuge, umfassend
einen Vorwärts-/Rückwärtsdrehungs-Schaltmechanismus (17) vom hydraulischen Kupplungstyp,
wobei der Vorwärts-/Rückwärtsdrehungs-Schaltmechanismus (17) eingerichtet ist, um eine Drehleistung eines Hauptmotors (7), der an einem Rumpf (2) montiert ist, in eine Ausgabe von Vorwärtsdrehung, Leerlauf oder Rückwärtsdrehung umzuwandeln und die Ausgabe an eine Schiffsschraube (5) zu übertragen,
wobei der Leerlauf einen Zustand darstellt, in dem keine Drehleistung an die Ausgabe übertragen wird,
ein Vorwärts-/Rückwärtsdrehungs-Schaltventil (24), das ein Drei-Positionen-Schalttyp ist, der eine Vorwärtsdrehungs-Position, eine Leerlauf-Position und eine Rückwärtsdrehungs-Position aufweist und eingerichtet ist, um einen Schaltvorgang des Vorwärts-/Rückwärtsdrehungs-Schaltmechanismus (17) zu steuern, und
eine Trolling-Vorrichtung (36), die eingerichtet ist, um den Druck eines Arbeitsöls, das zu dem Vorwärts-/Rückwärtsdrehungs-Schaltmechanismus (17) strömt, zu regulieren und zu steuern, wobei das Untersetzungs-Wendegetriebe (9) derart eingerichtet ist, dass:
wenn das Vorwärts-/Rückwärtsdrehungs-Schaltventil (24) während des normalen Antriebs in die Vorwärtsdrehungs-Position oder die Rückwärtsdrehungs-Position umgeschaltet wird,
wobei während des normalen Antriebs die Einstellung der Motordrehzahl mittels eines Drosselhebels (42) erfolgt,
die Trolling-Vorrichtung (36) eingerichtet ist, um ein Muster zu steuern, das den Druck des Arbeitsöls, das zu dem Vorwärts-/Rückwärtsdrehungs-Schaltmechanismus (17) strömt, reduziert, so dass sich das Muster unterscheidet, wenn das Vorwärts-/Rückwärtsdrehungs-Schaltventil (24) in der Vorwärtsdrehungs-Position ist und wenn das Vorwärts-/Rückwärtsdrehungs-Schaltventil (24) in der Rückwärtsdrehungs-Position ist; und
das Untersetzungs-Wendegetriebe (9) ein Betriebserfassungselement (41) umfasst, das eingerichtet ist, um einen Betriebszustand des Vorwärts-/Rückwärtsdrehungs-Schaltventils (24) zu erfassen;
und, wenn das Betriebserfassungselement (41) erfasst, dass sich das Vorwärts-/Rückwärtsdrehungs-Schaltventil (24) während des normalen Antriebs in der Leerlauf-Position befindet,
die Trolling-Vorrichtung (36) eingerichtet ist, um das Arbeitsöl so zu steuern, dass der Druck des Arbeitsöls, das zu dem Vorwärts-/Rückwärtsdrehungs-Schaltmechanismus (17) strömt, nicht reduziert wird.

2. (Geändert) Untersetzungs-Wendegetriebe (9) für Wasserfahrzeuge nach Anspruch 1, wobei
die Trolling-Vorrichtung (36) ein Druckreduzierungsventil (37), das eingerichtet ist, um den Druck des Arbeitsöls zu reduzieren und das druckreduzierte Arbeitsöl dem Vorwärts-/Rückwärtsdrehungs-Schaltmechanismus (17) zuzuführen, ein Proportionalventil (39), das eingerichtet ist, um einen Ausgabedruck des Arbeitsöls zu steuern, das von dem Druckreduzierungsventil (37) ausgegeben wird, und ein Direktverbindungsventil (38), das eingerichtet ist, um die Arbeitsölzufuhr zu dem Proportionalventil (39) ein- oder auszuschalten, umfasst und
die Trolling-Vorrichtung (36) eingerichtet ist, um das Muster, das den Druck des Arbeitsöls, das zu dem Vorwärts-/Rückwärtsdrehungs-Schaltmechanismus (17) strömt, reduziert, so zu steuern, dass es sich durch Ändern eines Arbeitsmusters des Proportionalventils (39) unterscheidet.

3. (Geändert) Untersetzungs-Wendegetriebe (9) für Wasserfahrzeuge nach Anspruch 1 oder 2, wobei,
während eines Übergangs zu einem Antrieb mit niedriger Drehzahl,
wobei die Schiffsschraube (5) mit niedriger Drehzahl gedreht wird, während der Motor (7) auf einer konstanten Drehzahl gehalten wird,
eine Rückkopplungssteuerung eingerichtet ist, um basierend auf einer Drehzahl der Schiffsschraube (5) durchgeführt zu werden, nachdem die Trolling-Vorrichtung (36) den Druck des Arbeitsöls, das zu dem Vorwärts-/Rückwärtsdrehungs-Schaltmechanismus (17) strömt, linear erhöht.

4. (Geändert) Untersetzungs-Wendegetriebe (9) für Wasserfahrzeuge nach Anspruch 1, wobei:
die Trolling-Vorrichtung (36) ein Druckreduzierungsventil (37), das eingerichtet ist, um den Druck des Arbeitsöls zu reduzieren und das druckreduzierte Arbeitsöl dem Vorwärts-/Rückwärtsdrehungs-Schaltmechanismus (17) zuzuführen, ein Proportionalventil (39), das eingerichtet ist, um einen Ausgabedruck des Arbeitsöls zu steuern, das von dem Druckreduzierungsventil (37) ausgegeben wird, und ein Direktverbindungsventil (38), das eingerichtet ist, um die Arbeitsölzufuhr zu dem Proportionalventil (39) ein- oder auszuschalten, umfasst; und
wenn das Betriebserfassungselement (41) erfasst, dass sich das Vorwärts-/Rückwärtsdrehungs-Schaltventil (24) während des normalen Antriebs in einer Leerlauf-Position befindet, die Trolling-Vorrichtung (36) eingerichtet ist, um das Arbeitsöl so zu steuern, dass das Direktverbindungsventil (38) die Arbeitsölzufuhr zu dem Proportionalventil (39) abschaltet, und das Druckreduzierungsventil (37) eingerichtet ist, um das Arbeitsöl zu dem Vorwärts-/Rückwärtsdrehungs-Schaltmechanismus (17) zu liefern, ohne den Druck des Arbeitsöls zu reduzieren.

5. (Geändert) Untersetzungs-Wendegetriebe (9) für Wasserfahrzeuge nach Anspruch 4, wobei
das Untersetzungs-Wendegetriebe (9) ein Trolling-Prioritätselement (49) umfasst, das eingerichtet ist, um so zu arbeiten, dass das Druckreduzierungsventil (37) in einem Fall vollständig geschlossen wird, in dem ein Fehler, wie etwa ein Kommunikationsfehler, während des Antriebs mit niedriger Drehzahl auftritt.

## Revendications

1. (Modifiée) Engrenage réducteur de marche arrière (9) pour navire comprenant
un mécanisme d'inversion de rotation en marche avant/arrière (17) de type embrayage hydraulique,
dans lequel ledit mécanisme d'inversion de rotation en marche avant/arrière (17) est configuré pour convertir une puissance de rotation d'un moteur principal (7) monté sur une coque (2) en une sortie de rotation en marche avant, de neutre ou de rotation en marche arrière et pour transférer la sortie à une hélice (5),
dans lequel le neutre représente un état dans lequel aucune puissance de rotation n'est transmise à la sortie,
une soupape d'inversion de rotation en marche avant/arrière (24) qui est un type d'inversion à trois positions comportant une position de rotation en marche avant, une position neutre et une position de rotation en marche arrière et est configurée pour commander une opération d'inversion du mécanisme d'inversion de rotation en marche avant/arrière (17), et
un dispositif de traîne (36) configuré pour réguler et commander la pression d'une huile de travail s'écoulant vers le mécanisme d'inversion de rotation en marche avant/arrière (17), dans lequel l'engrenage réducteur de marche arrière (9) est configuré de telle sorte que :
lorsque la soupape d'inversion de rotation en marche avant/arrière (24) est basculée sur la position de rotation en marche avant ou la position de rotation en marche arrière pendant une propulsion normale,
dans lequel pendant la propulsion normale, le réglage de la vitesse de moteur est effectué au moyen d'un levier d'accélérateur (42),
le dispositif de traîne (36) est configuré pour commander un modèle qui réduit la pression de l'huile de travail s'écoulant vers le mécanisme d'inversion de rotation en marche avant/arrière (17) de sorte que le modèle est différent lorsque la soupape d'inversion de rotation en marche avant/arrière (24) est dans la position de rotation en marche avant et lorsque la soupape d'inversion de rotation en marche avant/arrière (24) est dans la position de rotation en marche arrière ; et
l'engrenage réducteur de marche arrière (9) comprend un élément de détection de fonctionnement (41) configuré pour détecter un état de fonctionnement de la soupape d'inversion de rotation en marche avant/arrière (24) ;
et, lorsque l'élément de détection de fonctionnement (41) détecte que la soupape d'inversion de rotation en marche avant/arrière (24) est dans la position neutre pendant la propulsion normale,
le dispositif de traîne (36) est configuré pour commander l'huile de travail de sorte que la pression de l'huile de travail s'écoulant vers le mécanisme d'inversion de rotation en marche avant/arrière (17) n'est pas réduite.

2. (Modifiée) Engrenage réducteur de marche arrière (9) pour navire selon la revendication 1, dans lequel
le dispositif de traîne (36) comprend une soupape de réduction de pression (37) configurée pour réduire la pression de l'huile de travail et fournir l'huile de travail à pression réduite au mécanisme d'inversion de rotation en marche avant/arrière (17), une soupape proportionnelle (39) configurée pour commander une pression de sortie de la sortie d'huile de travail provenant de la soupape de réduction de pression (37), et une soupape de liaison directe (38) configurée pour établir ou couper une alimentation en huile de travail de la soupape proportionnelle (39), et
le dispositif de traîne (36) est configuré pour commander le modèle qui réduit la pression de l'huile de travail s'écoulant vers le mécanisme d'inversion de rotation en marche avant/arrière (17) de manière à être différente en changeant un modèle de travail de la soupape proportionnelle (39).

3. (Modifiée) Engrenage réducteur de marche arrière (9) pour navire selon la revendication 1 ou 2, dans lequel,
lors d'un passage à la propulsion à basse vitesse,
dans lequel l'hélice (5) tourne à petite vitesse pendant que le moteur (7) est maintenu à une vitesse constante,
une commande à rétroaction est configurée pour être mise en œuvre sur la base d'une vitesse de rotation de l'hélice (5) après que le dispositif de traîne (36) augmente linéairement la pression de l'huile de travail s'écoulant vers le mécanisme d'inversion de rotation en marche avant/arrière (17).

4. (Modifiée) Engrenage réducteur de marche arrière (9) pour navire selon la revendication 1, dans lequel :
le dispositif de traîne (36) comprend une soupape de réduction de pression (37) configurée pour réduire la pression de l'huile de travail et fournir l'huile de travail à pression réduite au mécanisme d'inversion de rotation en marche avant/arrière (17), une soupape proportionnelle (39) configurée pour commander une pression de sortie de la sortie d'huile de travail provenant de la soupape de réduction de pression (37), et une soupape de liaison directe (38) configurée pour établir ou couper l'alimentation en huile de travail de la soupape proportionnelle (39) ; et,
lorsque l'élément de détection de fonctionnement (41) détecte que la soupape d'inversion de rotation en marche avant/arrière (24) est dans une position neutre pendant la propulsion normale, le dispositif de traîne (36) est configuré pour commander l'huile de travail de sorte que la soupape de liaison directe (38) coupe l'alimentation en huile de travail de la soupape proportionnelle (39), et la soupape de réduction de pression (37) est configurée pour délivrer l'huile de travail au mécanisme d'inversion de rotation en marche avant/arrière (17) sans réduire la pression de l'huile de travail.

5. (Modifiée) Engrenage réducteur de marche arrière (9) pour navire selon la revendication 4, dans lequel
le réducteur de marche arrière (9) comprend un élément de priorité de traîne (49) configuré pour fonctionner de manière à fermer entièrement la soupape de réduction de pression (37) dans le cas où une erreur, telle qu'une erreur de communication, se produit pendant une propulsion à petite vitesse.
